# EUROPEAN PATENT SPECIFICATION

(11) **EP 2 543 962 B1**
(45) Date of publication and mention of the grant of the patent: **18.10.2017**
(21) Application number: 11172778.0
(22) Date of filing: 05.07.2011
(51) Int. Cl.: G01C 15/00, G01C 21/20, G06F 3/0481

(54) **Synchronization of the position and orientation of a 3D measurement device with the position and orientation of an intelligent guidance device**
Synchronisierung der Position und Ausrichtung eines 3D-Messgeräts mit Position und Ausrichtung einer intelligenten Führungsvorrichtung
Synchronisation de la position et de l'orientation d'un dispositif de mesure 3D avec la position et l'orientation d'un dispositif de guidage intelligent

(43) Date of publication of application: 09.01.2013
(73) Proprietor: Innovmetric Logiciels Inc., Québec QC G1N 4N6 (CA)
(72) Inventor: SOUCY, Marc, Québeck QC G1Y 3V7 (CA); DUWE, Hans-Peter, 88131 Lindau (DE)
(74) Representative: Lees, Gregory Alexander

(56) References cited:
- WO-A1-98/10246
- US-A1- 2004 051 680
- US-A1- 2010 039 391
- US-A1- 2011 066 375

## Description

### TECHNICAL FIELD

The present invention relates to the field of the use of Intelligent Guidance Devices (IGD) for guiding measurement processes using 3D graphics.

### BACKGROUND

A 3D Measurement Device (3DM) is a measurement system capable of measuring the (x, y, z) coordinates of points on physical parts in the 3-dimensional space, using any one of many known measurement principles. These devices are used in many different manufacturing industries for quality assurance procedures. An exemplary 3D measurement device is disclosed in US 2010/039391 and comprises a probe connected to a stationary terminal having a display device.

In some instances, the devices are made to be portable such that they may be easier to handle and manipulate. However, since they have their own coordinate system, they are not necessarily compatible with other existing technologies. Images or measurements taken with these devices cannot easily be transferred to other imaging devices without losing some information attached to the coordinate system. Therefore, there is a need to adapt 3D measurement devices to be used with other technologies.

WO 98/10246 discloses a handheld portable digital geographic data manager (GDM) comprising three GPS antennas and receivers, plus at least two cameras, which enable the GDM to provide information as to the location in 3D of an object.

US 2004/0051680 A1 discloses a system in which a display is mounted on and in front of the eyes of a user and, in real time, graphical information is superimposed on a user's magnified view of the real world, shown on the display.

Document US 2011/0066375 A1 discloses methods and apparatus for providing navigational information for visual guidance to locations of objects or points. An integrated handheld apparatus provides navigational information within a digital model of the surrounding environment, received from a remote database and comprising measured points.

### SUMMARY

There is described herein a method to synchronize the position and orientation of an IGD 3D Coordinate System with the position and orientation of a 3DM 3D Coordinate System, in which the IGD's gravity direction measurement device and electronic compass are used explicitly.

In accordance with a first broad aspect of the present invention, there is provided a method comprising: synchronizing a three-dimensional measurement device (3DM) configured to measure coordinates of points on physical parts in a three-dimensional space and having a 3DM internal 3D coordinate system O_{3DM}, X_{3DM}, Y_{3DM}, and Z_{3DM}, with a hand-held intelligent guidance device (IGD) that is physically separate from the 3DM, the IGD having a processing unit, a display device, a gravity direction measurement device, an electronic compass, a three-axis accelerometer, and an IGD internal 3D coordinate system O_{IGD}, X_{IGD}, Y_{IGD}, Z_{IGD}, the synchronizing comprising: determining coordinates RPX_{IGD}, RPY_{IGD}, RPZ_{IGD} of a reference point RP in the IGD internal 3D coordinate system O_{IGD}, X_{IGD}, Y_{IGD}, Z_{IGD}; defining a coordinate system O_{Earth}, X_{IGD-Earth}, Y_{IGD-Earth}, Z_{IGD-Earth} using a direction opposite to gravity as Z_{IGD-Earth} and a direction corresponding to a magnetic north pole as Y_{IGD-Earth}, from a perspective of the IGD; computing and applying a rigid transformation T_{IGD-To-IGDEarth} to transform axes X_{IGD}, Y_{IGD}, Z_{IGD} of the IGD internal 3D coordinate system to X_{IGD-Earth}, Y_{IGD-Earth}, Z_{IGD-Earth} and the reference point RP having the coordinates RPX_{IGD}, RPY_{IGD}, RPZ_{IGD} to O_{Earth}; determining coordinates RPX_{3DM}, RPY_{3DM}, RPZ_{3DM} of the reference point RP in the 3DM internal 3D coordinate system O_{3DM}, X_{3DM}, Y_{3DM}, and Z_{3DM}; defining a coordinate system O_{Earth}, X_{3DM-Earth}, Y_{3DM-Earth}, Z_{3DM-Earth} using a direction opposite to gravity as Z_{3DM-Earth} and the direction corresponding to the magnetic north pole as Y_{3DM-Earth}, from a perspective of the 3DM; and computing and applying a rigid transformation T_{3DM-To-3DMEarth} to transform axes X_{3DM}, Y_{3DM}, and Z_{3DM} of the 3DM internal 3D coordinate system to axes X_{3DM-Earth}, Y_{3DM-Earth}, Z_{3DM-Earth} and the reference point RP having the coordinates RPX_{3DM}, RPY_{3DM}, RPZ_{3DM} to O_{Earth}; and displaying, using the display device of the IGD, 3D graphics in a 3D coordinate system synchronized with a 3D coordinate system of the 3DM.

In accordance with another broad aspect of the present invention, there is provided a system for synchronizing a three-dimensional measurement device (3DM) having a 3DM internal 3D coordinate system O_{3DM}, X_{3DM}, Y_{3DM}, and Z_{3DM}, with an intelligent guidance device (IGD) that is physically separate from the 3DM, the IGD having a display device, a gravity direction measurement device, an electronic compass, and an IGD internal 3D coordinate system O_{IGD}, X_{IGD}, Y_{IGD}, Z_{IGD}, the system comprising: an IGD transformation module operatively connected to the IGD and adapted to define a coordinate system O_{Earth}, X_{IGD-Earth}, Y_{IGD-Earth}, Z_{IGD-Earth} using a direction opposite to gravity as Z_{IGD-Earth} and a direction corresponding to a magnetic north pole as Y_{IGD-Earth}, from a perspective of the IGD, and compute and apply a rigid transformation T_{IGD-To-IGDEarth} to transform axes X_{IGD}, Y_{IGD}, Z_{IGD} of the IGD internal 3D coordinate system to axes X_{IGD-Earth}, Y_{IGD-Earth}, Z_{IGD-Earth} and a reference point RP having coordinates RPX_{IGD}, RPY_{IGD}, RPZ_{IGD} in the IGD internal 3D coordinate system to O_{Earth}; and a 3DM transformation module operatively connected to the 3DM and adapted to define a coordinate system O_{Earth}, X_{3DM-Earth}, Y_{3DM-Earth}, Z_{3DM-Earth} using a direction opposite to gravity as Z_{3DM-Earth} and the direction corresponding to the magnetic north pole as Y_{3DM-Earth}, from a perspective of the 3DM, compute and apply a rigid transformation T_{3DM-To-3DMEarth} to transform axes X_{3DM}, Y_{3DM}, and Z_{3DM} of the 3DM internal 3D coordinate system to axes X_{3DM-Earth}, Y_{3DM-Earth}, Z_{3DM-Earth} and the reference point RP having coordinates RPX_{3DM}, RPY_{3DM}, RPZ_{3DM} in the 3DM internal 3D coordinate system to O_{Earth}.

In accordance with a further broad aspect of the present invention, there is provided at least one computer program product for synchronizing a three-dimensional measurement device (3DM) having a 3DM internal 3D coordinate system O_{3DM}, X_{3DM}, Y_{3DM}, and Z_{3DM}, with an intelligent guidance device (IGD) having a display device, a gravity direction measurement device, an electronic compass, and an IGD internal 3D coordinate system O_{IGD}, X_{IGD}, Y_{IGD}, Z_{IGD}, comprising instruction means encoded on a computer-readable medium, for causing operations as set out in the method above.

In the present specification, the following definitions are to be used throughout.

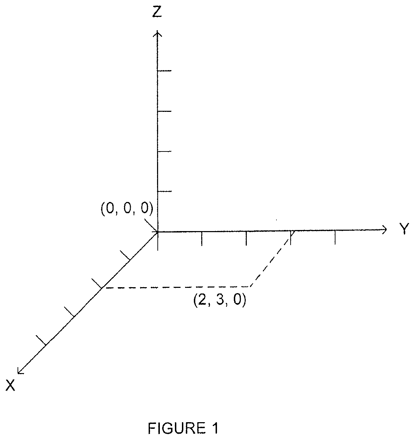

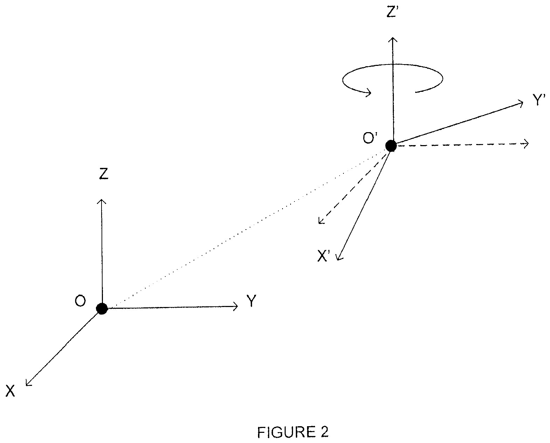

3D Coordinate System: A system for assigning 3 numbers to each point in a 3-dimensional space. A common instance of a 3D Coordinate System is the Cartesian coordinate system where three X, Y, Z axes perpendicular to each other and meeting each other at an origin point (0, 0, 0) are used to parameterize the 3-dimensional space (see Figure 1). An infinite number of 3D Coordinate Systems can be derived from the basic Cartesian coordinate system by moving (or translating) the origin point in 3-dimensional space, defining a new origin O', and rotating the original X, Y, Z axes to define new axes X', Y', and Z' (see Figure 2). In such a case, the X', Y', and Z' axes can each be expressed by using a triplet of (x, y, z) coordinates, expressed in the Cartesian coordinate system. The triplet of (x, y, z) coordinates representing a particular axis is computed by determining a point P located at a distance of 1 from the origin O' along the direction of the axis, and then subtracting the origin O' from this point P.

A 3D Coordinate System is said to be right-handed if the vector product between the first axis (for example X) and the second axis (for example Y) produces the third axis (for example Z). A 3D Coordinate System would be left-handed if the vector product between the second axis and the first axis would produce the third axis. This document uses right-handed 3D Coordinate Systems in all explanations. However, left-handed 3D Coordinate Systems could be used as well without loss of generality.

3D Transformation: A mathematical operation that transforms any input point (xᵢ, yᵢ, zᵢ) in 3-dimensional space into an output point (xₒ, yₒ, zₒ).

Rigid 3D Transformation: Rigid 3D Transformations are subsets of the possible 3D Transformations applicable to input points by which only rotations and translations are applied to these points. Such a 3D Transformation is called rigid because it preserves the original shape and dimensions of any 3-dimensional object. For example, let's imagine a box having a width of 1 meter, a height of 2 meters, and a depth of 3 meters. Then, let's consider any possible Rigid 3D Transformation that can be applied to this box. If any of these possible Rigid 3D Transformations are applied to the box, the box dimensions would always remain 1 meter by 2 meters by 3 meters under all circumstances.

A Rigid 3D Transformation RT can be expressed by six numbers (rₓ, r_{y}, r_{z}, tₓ, t_{y}, t_{z}). The numbers rₓ, r_{y}, and r_{z} represent successive rotations to be applied about the X, Y, and Z axes of the Cartesian coordinate system. The numbers tₓ, t_{y}, and t_{z} represent successive translations to be applied along the X, Y, and Z axes of the Cartesian coordinate system. There are various mathematical techniques available to represent Rigid 3D Transformation using 4 by 4 matrices and to extract the three rotations and three translations from a 4 by 4 Rigid 3D Transformation matrix.

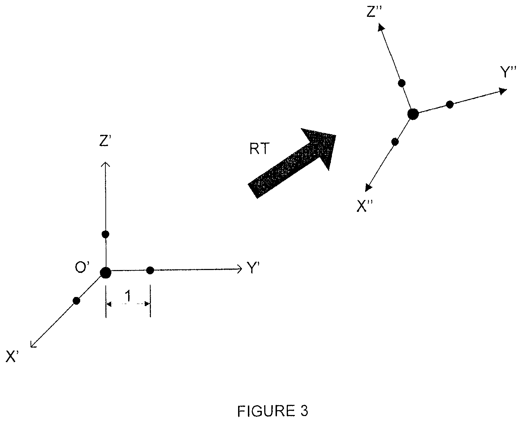

In addition to being applicable to points, Rigid 3D Transformations can also be applied to 3D Coordinate Systems. Four points are needed to define an arbitrary 3D Coordinate System: the origin O', and the points at a unitary distance of 1 from O' along the X', Y', and Z' axes. A Rigid 3D Transformation is applied to a 3D Coordinate System by transforming the four points that are needed to describe it. The origin and three axes of the transformed 3D Coordinate System may then be rebuilt from the four transformed points by subtracting the transformed origin from the three transformed points at the extremity of the unitary axes (see Figure 3).

Gravity Direction Measurement Device: A measurement device that is capable of measuring the direction of gravity, such as a three-axis inclinometer. Gravity direction measurement devices can be incorporated in computing devices. The gravitational force generally points towards the center of Earth with a relatively stable intensity locally.

Electronic Compass: A measurement device that can determine the direction of the Earth's North magnetic pole. An electronic compass can be incorporated in computing devices. Locally, the measurements produced by an electronic compass are fairly constant. The North direction can be used not only for geographical navigation purposes, but also as a fixed reference direction to define a coordinate system.

Three-Axis Accelerometer: A measurement device that can determine the acceleration along three axes perpendicular to each other. A three-axis accelerometer can be incorporated in computing devices. By letting a computing device that incorporates a three-axis accelerometer in a stable position for a predetermined period of time such as a few seconds for example, then starting to move it in 3D space, the three-axis accelerometer can be used to determine the speed and relative position of the computing device along the three axes.

Display Device: A material support to visually output information to an end-user, such as text, images, videos, etc. Computing devices are generally equipped with display devices.

Intelligent Guidance Device (IGD): A computing device equipped with a communication unit, a display device, a gravity direction measurement device, an electronic compass, and a three-axis accelerometer. Examples of an IGD comprise the iPhone™ 3GS model, the iPhone™ 4 model, and the like.

3D Measurement Device (3DM): A measurement system capable of measuring the (x, y, z) coordinates of points on physical parts in the 3-dimensional space. Any measurement principle can be used.

### BRIEF DESCRIPTION OF THE DRAWINGS

Further features and advantages of the present invention will become apparent from the following detailed description, taken in combination with the appended drawings, in which:
Fig. 1 illustrates a Cartesian coordinate system with a point parametrized in a 3-dimensional space, in accordance with one embodiment;
Fig. 2 illustrates the Cartesian coordinate system of Fig. 1 and a second 3D coordinate system defined by translating and rotating the Cartesian coordinate system, in accordance with one embodiment;
Fig. 3 illustrates how a 3D coordinate system is transformed by a Rigid 3D Transformation, in accordance with one embodiment;
Fig. 4a illustrates an exemplary transformation of an IGD 3D coordinate system to orient it with respect to gravity and the North direction and transform a reference point RP_{IGD} into O_{Earth}, in accordance with one embodiment;
Fig. 4b illustrates the axis adjustment operation, in accordance with one embodiment;
Fig. 5 illustrates an exemplary transformation of a 3DM 3D coordinate system to orient it with respect to gravity and the North direction and transform reference point RP_{3DM} into O_{Earth}, in accordance with one embodiment;
Fig. 6 is a block diagram of a system for synchronizing a 3DM and an IGD where the transformation modules are integrated onto the respective devices, in accordance with one embodiment;
Fig. 7 is a block diagram of a system for synchronizing a 3DM and an IGD where a separate computing device is used for one of the transformation modules, in accordance with one embodiment; and
Fig. 8 is a block diagram of a system for synchronizing a 3DM and an IGD where a separate computing device is used for both of the transformation modules, in accordance with one embodiment.

It will be noted that throughout the appended drawings, like features are identified by like reference numerals.

### DETAILED DESCRIPTION

A 3DM is a device designed to measure the (x, y, z) coordinates of points and report these measured coordinates from the perspective of its internal 3D Coordinate System defined by an origin O_{3DM} and three axes X_{3DM}, Y_{3DM}, and Z_{3DM}. An IGD is a device that also has an internal 3D Coordinate System defined by an origin O_{IGD} and three axes X_{IGD}, Y_{IGD}, Z_{IGD}.

Figure 1 illustrates a Cartesian coordinate system having axes X, Y, and Z and an origin (0, 0, 0). A point (2, 3, 0) is parametrized in the 3-dimensional space. Figure 2 illustrates a new coordinate system defined by translating and rotating the Cartesian coordinate system of figure 1. This new coordinate system has axes X', Y', Z'. In figure 3, the coordinate system defined by X', Y', Z' is further transformed by rigid 3D transformation RT by transforming four points and recomputing the axes such that we have X", Y", Z". These principles are used in order to synchronize the position and orientation of a 3DM 3D Coordinate System with the position and orientation of an IGD 3D Coordinate System.

In order to synchronize the position of an IGD 3D Coordinate System with the position of a 3DM 3D Coordinate System, the first step consists in selecting a reference point RP and determining the coordinates RPX_{IGD}, RPY_{IGD}, RPZ_{IGD} of the reference point RP in the internal coordinate system of the IGD and the coordinates RPX_{3DM}, RPY_{3DM}, RPZ_{3DM} of the reference point RP in the internal coordinate system of the 3DM. It should be understood that any reference point could be used and any method could be used to determine the reference point coordinates in both IGD or 3DM 3D Coordinate Systems.

For example, the IGD could rest in a stable position and a mark such as a circle or a point for example, could be displayed on the Display Device of the IGD. The coordinates of the point or the circle's center would be determined with respect to the IGD 3D Coordinate System by setting up a coordinate system based on the IGD manufacturer specifications. The 3DM could then be used to measure the displayed circle or point and determine the point or circle's center coordinates in the 3DM 3D Coordinate System.

Once the position of a common reference point, i.e. the reference point RP, has been established in both IGD and 3DM 3D Coordinate Systems, the orientation of the IGD and 3DM 3D Coordinate Systems can be determined. Using the gravity direction measurement device of the IGD, the direction of gravity is measured and a vector Z_{IGD-Earth} pointing in a direction opposite to gravity (up) is determined. Using the electronic compass of the IGD, the direction of the North magnetic pole is measured and a vector Y_{IGD-Earth} pointing in the North direction is determined.

Since the Z_{IGD-Earth} and Y_{IGD-Earth} axes are computed from separate measurement devices, they are not perfectly perpendicular to each other. An adjustment operation is used to make them perpendicular to each other. A plane formed by Z_{IGD-Earth} and Y_{IGD-Earth} is defined. One of the two axes, for example Z_{IGD-Earth}, is fixed. The adjusted axis, for example Y_{IGD-Earth}, is then rotated in the plane to make it perpendicular to the fixed axis. There are two positive rotation angles below or equal to 180 degrees that make the adjusted axis perpendicular to the fixed axis. The one closest to 0 is used. Alternately, the Y_{IGD-Earth} could be used as the fixed axis, and the Z_{IGD-Earth} axis could be rotated to make it perpendicular to Y_{IGD-Earth} using the same method.

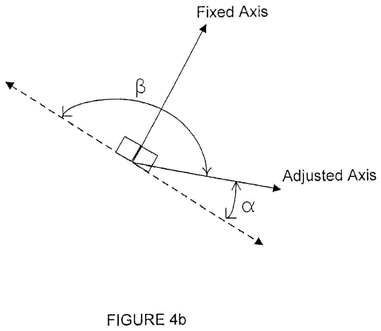

The adjustment operation is illustrated in figure 4b. In the plane formed by the fixed axis and the adjusted axis, two positive rotation angles α and β less than or equal to 180° can be applied to the adjusted axis to make it perpendicular to the fixed axis. The smallest of α and β is used.

A vector X_{IGD-Earth} is found by computing the vector product between Y_{IGD-Earth} and Z_{IGD-Earth}. An arbitrary origin O_{Earth} is defined at (0, 0, 0). O_{Earth}, X_{IGD-Earth}, Y_{IGD-Earth}, Z_{IGD-Earth} represent a 3D Coordinate System where one of the axes points in a direction opposite to gravity and the other points towards North.

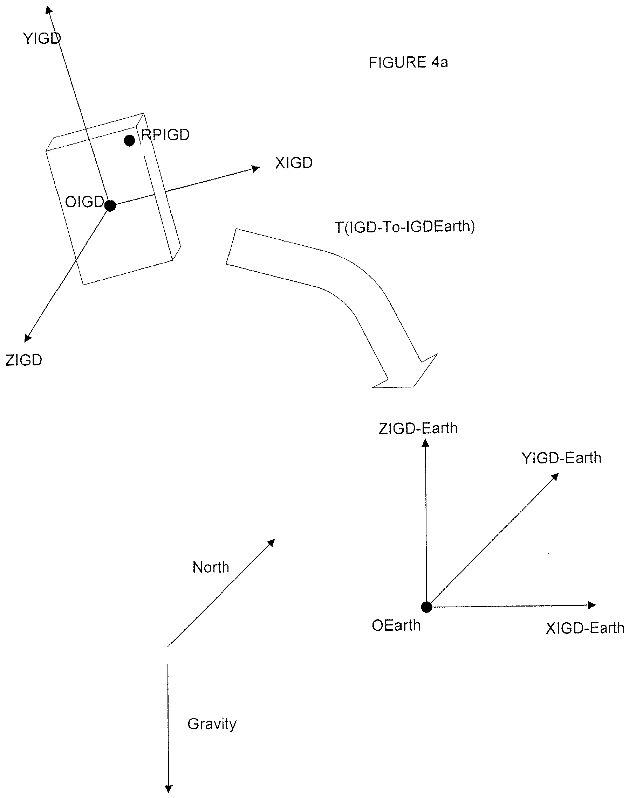

A Rigid 3D Transformation T_{IGD-To-IGDEarth} is computed to both transform the X_{IGD}, Y_{IGD}, Z_{IGD} axes to the X_{IGD-Earth}, Y_{IGD-Earth}, Z_{IGD-Earth} axes and transform the reference point (RPX_{IGD}, RPY_{IGD}, RPZ_{IGD}) to the origin O_{Earth}, as illustrated in Figure 4a.

The direction of gravity is measured from the standpoint of the 3DM 3D Coordinate System. Any method known to the person skilled in the art may be used. For example, adjust a flat physical part using a level to bring its flat section perpendicular to gravity, measure the flat section with the 3DM, fit a plane on the measured points, and use the plane's normal vector to determine the direction of gravity. Alternatively, a gravity direction measurement device integrated to the 3DM may be used to determine the direction of gravity.

From the gravity vector measured from the standpoint of the 3DM 3D Coordinate System, a vector Z_{3DM-Earth} pointing in a direction opposite to gravity (up) may be determined. The direction of the North magnetic pole is measured from the standpoint of the 3DM 3D Coordinate System. Any method known to a person skilled in the art may be used. For example, use an electronic compass integrated to the 3DM, display the North direction on the IGD display device and use the 3DM to measure the displayed direction, or use a standard compass and use the 3DM to measure the direction indicated by the standard compass.

From the North direction measured from the standpoint of the 3DM 3D Coordinate System, a vector Y_{3DM-Earth} pointing in the North direction may be determined. A plane formed by Z_{3DM-Earth} and Y_{3DM-Earth} is then defined. If Y_{3DM-Earth} is not perfectly perpendicular to Z_{3DM-Earth}, either one of Z_{3DM-Earth} or Y_{3DM-Earth} may be rotated in the plane to bring the two perfectly perpendicular. Two positive rotation angles are possible, the smallest is used.

A vector X_{3DM-Earth} is determined by computing the vector product between Y_{3DM-Earth} and Z_{3DM-Earth}. An origin O_{Earth} is defined at (0, 0, 0). O_{Earth}, X_{3DM-Earth}, Y_{3DM-Earth}, Z_{3DM-Earth} represent a 3D Coordinate System where one of the axes points in a direction opposite to gravity and the other points towards North.

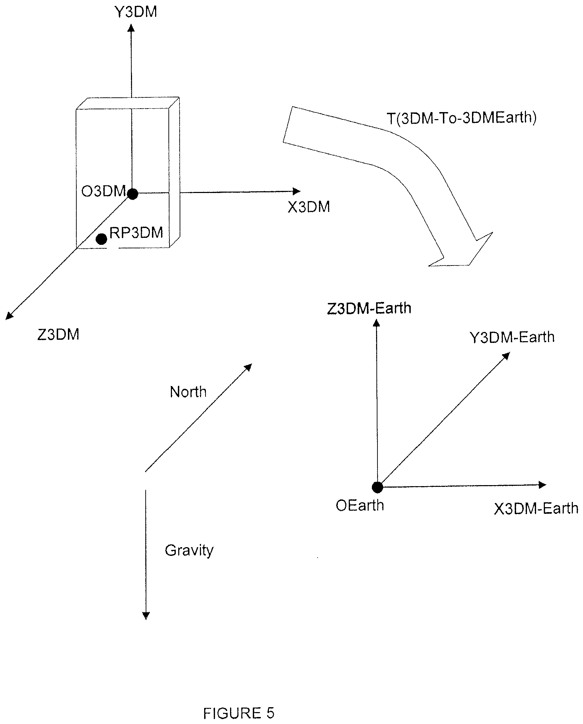

A Rigid 3D Transformation T_{3DM-To-3DMEarth} is computed to both transform the X_{3DM}, Y_{3DM}, Z_{3DM} axes of the 3DM coordinate system to the X_{3DM-Earth}, Y_{3DM-Earth}, Z_{3DM-Earth} axes and transform the reference point (RPX_{3DM}, RPY_{3DM}, RPZ_{3DM}) to the origin O_{Earth}, as illustrated in Figure 5.

The position and orientation of the IGD and the position and orientation of the 3DM are synchronized by transforming the internal 3D Coordinate System of the IGD by Rigid 3D Transformation T_{IGD-To-IGDEarth} and transforming the internal 3D Coordinate System of the 3DM by Rigid 3D Transformation T_{3DM-To-3DMEarth}. The position and orientation of the IGD and the position and orientation of the 3DM are synchronized since a reference point RP whose coordinates are known in both IGD and 3DM internal 3D Coordinate Systems has been used to define the origin O_{Earth}, the transformed X_{IGD} and X_{3DM} axes are parallel to each other and point in the same direction, the transformed Y_{IGD} and Y_{3DM} axes are parallel to each other and point in the same direction, and the transformed Z_{IGD} and Z_{3DM} axes are parallel to each other and point in the same direction.

Once the position and orientation of the IGD and the position and orientation of the 3DM are synchronized, the synchronization should be maintained at all times. Three cases may need to be specifically addressed.

The first case is related to the nature of a typical IGD, i.e. an IDG is hand-held and can be moved freely. Therefore, changes in the position of the IGD are to be monitored. The three-axis accelerometer of the IGD is used for this monitoring purpose. The IGD must be kept in a stable position when its position is synchronized to the 3DM position so that the IGD speed be zero along all three axes. Once the positions of the IGD and 3DM have been synchronized as described above, the tracking of the motion of the IGD starts and the three-axis accelerometer is used to measure the current acceleration of the IGD along the three axes X_{IGD}, Y_{IGD}, Z_{IGD}. From the acceleration measurements, the IGD determines its current speed and position along three axes X_{IGD}, Y_{IGD}, Z_{IGD}, and its position variation.

From the position variation of the IGD, three offset values ΔX_{offset}, ΔY_{offset}, ΔZ_{offset} along the IGD three axes X_{IGD}, Y_{IGD}, Z_{IGD}, which correspond to the displacement vector for the IGD, are determined and applied to the coordinates RPX_{IGD}, RPY_{IGD}, RPZ_{IGD} of the reference point RP in the internal IGD 3D coordinate system to obtain an updated reference point RP' having the coordinates RPX_{IGD}+ΔX_{offset}, RPY_{IGD}+ΔY_{offset}, RPZ_{IGD}+ΔZ_{offset} in the internal IGD 3D coordinate system. The updated reference point RP' is then used to update the Rigid 3D Transformation T_{IGD-To-IGDEarth} and maintain the synchronization of the positions of the IGD and 3DM while the IGD is in motion. The updated Rigid 3D Transformation T_{IGD-To-IGDEarth} both transforms the X_{IGD}, Y_{IGD}, Z_{IGD} axes to the X_{IGD-Earth}, Y_{IGD-Earth}, Z_{IGD-Earth} axes and transform the updated reference point RP' to O_{Earth}.

The second case is related to the nature of a typical IGD, which is that it is hand-held and can be rotated freely. Therefore, changes in the orientation of the IGD are to be monitored. If a change in the orientation of the IGD is detected, the Rigid 3D Transformation T_{IGD-To-IGDEarth} should be updated by re-measuring the directions of gravity and North magnetic pole using the IGD gravity direction measurement device and electronic compass, and then updating the Rigid 3D Transformation T_{IGD-To-IGDEarth}.

In addition, measurement processes generally require the transformation of the 3DM 3D Coordinate System into other 3D Coordinate Systems, typically ones created in Computer-Aided Design (CAD) software. To maintain the synchronization of the position and orientation of the IGD and the position and orientation of the 3DM, the invert of the Rigid 3D Transformation T_{3DM-To-3DMEarth} should be applied to both the 3D Coordinate System O_{Earth}, X_{IGD-Earth}, Y_{IGD-Earth}, Z_{IGD-Earth} and the 3D Coordinate System O_{Earth}, X_{3DM-Earth}, Y_{3DM-Earth}, Z_{3DM-Earth}. This operation transforms the IGD 3D Coordinate System into the internal 3DM 3D Coordinate System, while keeping the positions and orientations synchronized. Then, an operator can determine a Rigid 3D Transformation transforming the internal 3DM 3D Coordinate System into the 3D Coordinate System of a model designed in CAD (Computer-Aided Design) software. This Rigid 3D Transformation would then be applied to both IGD and 3DM 3D Coordinate Systems in order to maintain their position and orientation synchronized.

Once the position and orientation of the IGD and the position and orientation of the 3DM are synchronized, the IGD can be used to guide a measurement process by means of 3D graphics displayed on the IGD display device. The following methodology demonstrates measurement guidance by means of 3D graphics.

First, the position and orientation of the IGD and the position and orientation of the 3DM 3D Coordinate Systems are synchronized, as described above. Then, the 3DM 3D Coordinate System is usually transformed to bring it into a more useful position and orientation. For example, points are measured on a physical part or assembly, and these measured points are used to construct a transformation that transforms the 3DM 3D Coordinate System into a CAD 3D Coordinate System. Since synchronization is achieved and maintained, the IGD 3D Coordinate System is also transformed, and the IGD 3D Coordinate System will have the same position and orientation compared to the corresponding CAD 3D Coordinate System.

It then becomes possible to use the IGD display device to display 3D graphics of the CAD model and ensure that these 3D graphics have the same position and orientation as the CAD 3D Coordinate System. In the above example, 3D graphics to be displayed on the IGD are determined by geometry defined in the CAD 3D Coordinate System. In order to produce 3D graphics of this geometry and display these 3D graphics on the IGD display device, the following Rigid 3D Transformations are applied successively to this geometry: the invert of the 3DM-to-CAD Rigid 3D Transformation; T_{3DM-To-3DMEarth}; the invert of T_{IGD-To-IGDEarth}.

If the operator needs to measure a specific section of the CAD model during a measurement routine, the IGD display device may be used to display the specific section using 3D graphics. Guidance 3D graphics such as 3D geometry, 3D arrows and 3D text annotations can be used to supply information to the operator and guide the measurement process. For example, if a given target point needs to be measured, the target point and 3D arrows indicating the current distance between the 3DM and the target point along the three axes can be displayed on the IGD display device. Because the target point position on the display is close to what the operator sees on the physical part in front of his eyes, and the 3D arrows are oriented along the axes of the physical part or assembly, they help the operator reaching the target position more quickly.

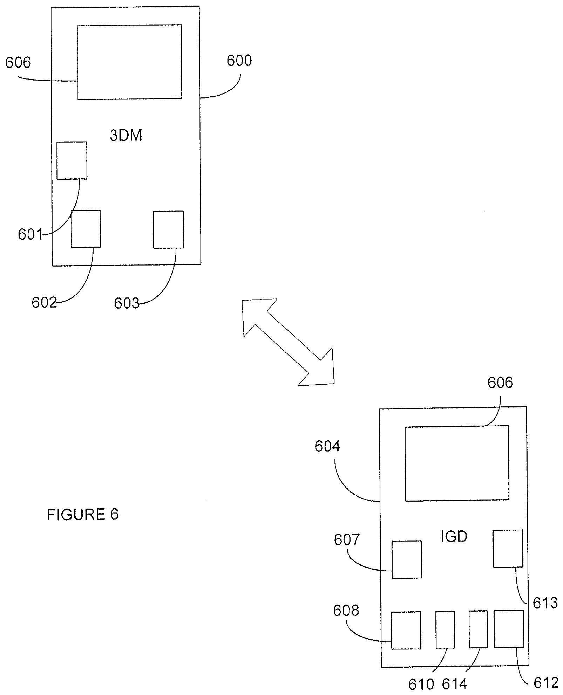

Figure 6 illustrates an embodiment for a system for synchronizing the internal coordinate systems of a 3DM 600 and an IGD 604 in order to allow measurement guidance using the IGD 604. In this embodiment, the 3DM 600 comprises a processing unit 601, a display device 606, a 3DM transformation module 602, and a coordinate measurement module 603. The 3DM coordinates measurement module 603 comprises at least one 3D measurement probe and is adapted to measure the 3D coordinates of points in the 3D space, such as the coordinates of the reference point RP. The 3DM transformation module 602 is a software product adapted to define the coordinate system O_{Earth}, X_{3DM-Earth}, Y_{3DM-Earth}, Z_{3DM-Earth} using the direction opposite to gravity as Z_{3DM-Earth} and the direction corresponding to the magnetic north pole as Y_{3DM-Earth}, from the perspective of the 3DM. The 3DM transformation module 602 will then compute the rigid transformation T_{3DM-To-3DMEarth} to both transform the X_{3DM}, Y_{3DM}, Z_{3DM} axes of the 3DM coordinate system to the X_{3DM-Earth}, Y_{3DM-Earth}, Z_{3DM-Earth} axes and the reference point (RPX_{3DM}, RPY_{3DM}, RPZ_{3DM}) to the origin O_{Earth}. This rigid transformation can then be applied to the internal coordinate system of the 3DM 600.

Figure 6 also illustrates the IGD 604 with which the 3DM 600 is being synchronized. In the embodiment illustrated, the IGD 604 also has a display device 606 and a processing unit 607. A gravity direction measurement device 608, an electronic compass 612, and a three-axis accelerometer 613 are integrated inside the IGD 604. The IGD 604 also comprises an IGD coordinates module 614 which is a software product adapted to receive the coordinates RPX_{IGD}, RPY_{IGD}, RPZ_{IGD} of the reference point RP, receive the measured acceleration of the IGD along the three axes X_{IGD}, Y_{IGD}, Z_{IGD} from the three-axis accelerometer 613, determine the three offset values ΔX_{offset}, ΔY_{offset}, ΔZ_{offset} along the IGD three axes X_{IGD}, Y_{IGD}, Z_{IGD} corresponding to the IGD position variation, and compute the updated reference point RP' having the coordinates RPX_{IGD}+ΔX_{offset}, RPY_{IGD}+ΔY_{offset}, RPZ_{IGD}+ΔZ_{offset}.

While in this embodiment, the coordinates of the reference point RP are entered by the user and received by the IGD coordinates module 614, the IGD coordinates module 614 may be further adapted to determine the coordinates of the reference point RP. For example, the IGD coordinates module 614 may be adapted to display on the display 606 a mark such as a circle for example, and determine the 3D coordinates of the mark in the IGD internal 3D coordinate system.

Also integrated is an IGD transformation module 610, which is a software product adapted to define the coordinate system O_{Earth}, X_{IGD-Earth}, Y_{IGD-Earth}, Z_{IGD-Earth} using the direction opposite to gravity as Z_{IGD-Earth} and the direction corresponding to the magnetic north pole as Y_{IGD-Earth}, from the perspective of the IGD 604. The IGD transformation module 610 receives the coordinates of the reference point from the IGD coordinate module 614, and computes and applies a rigid transformation T_{IGD-To-IGDEarth} to both transform the X_{IGD}, Y_{IGD}, Z_{IGD} axes of the IGD coordinate system to the X_{IGD-Earth}, Y_{IGD-Earth}, Z_{IGD-Earth} axes and the reference point RPX_{IGD}, RPY_{IGD}, RPZ_{IGD} to O_{Earth}. The IGD transformation module 610 also receives the coordinates of the updated reference point RP' from the IGD coordinate module 614, and computes and applies an updated rigid transformation T_{IGD-To-IGDEarth} to both transform the X_{IGD}, Y_{IGD}, Z_{IGD} axes of the IGD coordinate system to the X_{IGD-Earth}, Y_{IGD-Earth}, Z_{IGD-Earth} axes and the updated reference point RP' to the origin O_{Earth} in order to maintain the position and orientation synchronization between the IGD and the 3DM while the IGD is moving.

In the embodiment of figure 6, a specially adapted 3DM 600 and a specially adapted IGD 604 are sufficient to perform the above-described synchronization and allow the IGD 604 to be used to display 3D graphics in a known position and orientation. The IGD transformation module 610, the 3DM transformation module 602, and the IGD coordinates module 614 can be downloaded onto the respective devices via the Internet or transferred from a storage medium such as a USB key, a scandisk, or any other type of memory device. The transfer of the software program onto the devices may be done in a wireless manner or a connected manner using one or more wires or cables. The modules 602, 610, 614 may also be provided on the devices at the time of fabrication or manufacturing. The IGD 604 and the 3DM 600 may also be in communication together to transfer 3D images from one device to the other. This communication may be done in a wireless manner, such as Radio Frequency, WiFi, infrared, microwaves, etc. This communication may also be done in a connected manner using one or more wires or cables.

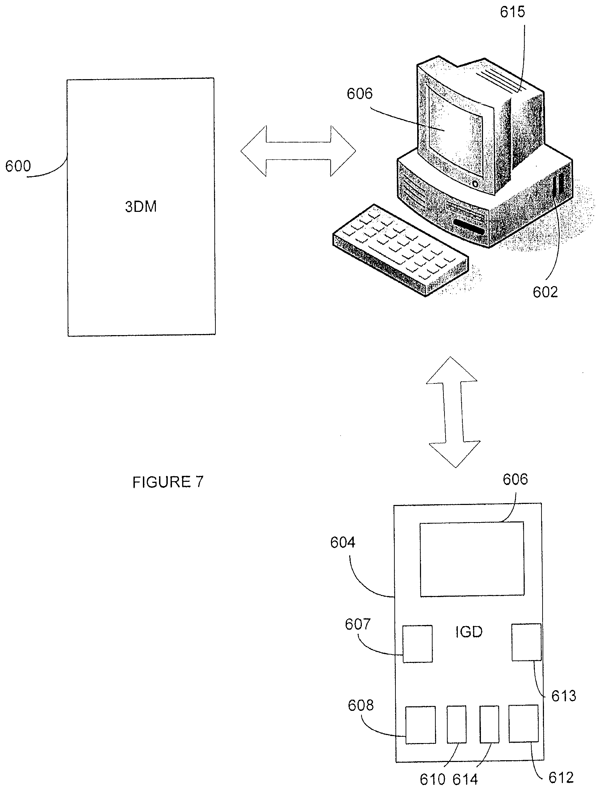

Figure 7 illustrates a second embodiment of the system for synchronizing the IGD 604 and the 3DM 600. In this case, one of the transformation modules, namely the 3DM transformation module 602 is on a computing device 615 separate from the 3DM 600. Alternatively, the transformation module on the computing device 615 may comprise the IGD transformation module 610 while the 3DM transformation modulo 602 is integrated in the 3DM 600, as per figure 6. It should be understood that the updating of the reference point RP while the IGD 604 is moving may be performed by the computing device 615. In this case, the computing device 615 receives the measured acceleration of the IGD along the three axes X_{IGD}, Y_{IGD}, Z_{IGD} from the IGD 604, determines the three offset values ΔX_{offset}, ΔY_{offset}, ΔZ_{offset}, and computes the updated reference point RP' having the coordinates RPX_{IGD}+ΔX_{offset}, RPY_{IGD}+ΔY_{offset}. RPZ_{IGD}+ΔZ_{offset}.

In this embodiment, the computing device 615 has a display device 606. The computing device 615 may be a Personal Computer (PC), a laptop, a Personal Digital Assistant (PDA), or any other programmable machine that can store, retrieve, and process data and therefore includes at least one Central Processing Unit (CPU) that performs most calculations and includes a main memory, a control unit, and an arithmetic logic unit. Communications, wireless or connected, may occur between the 3DM 600 and the computing device 615, and between the computing device 615 and the IGD 604.

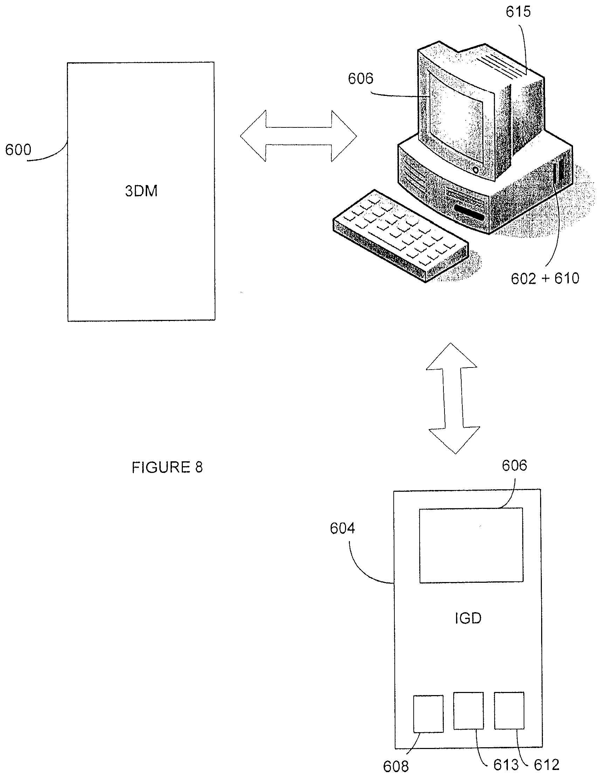

Figure 8 illustrates a third embodiment of the system for synchronizing the IGD 604 and the 3DM 600. In this case, both of the transformation modules 602 and 610 are present on the separate computing device 615. It should be understood that the computing device 615 may be made up of one or more computers, or a network of computers, and is adapted to be in communication with the IGD 604 and the 3DM 600.

In one embodiment, the coordinates of the reference point RP expressed in the IGD internal coordinate system are input in the computing device 615. In another embodiment, the computing device is adapted to receive the coordinates of the reference point RP expressed in the IGD internal 3D coordinate system from the IGD 604 which may be adapted to determine the coordinates of a reference mark displayed on the display 606, as described above.

Other devices, besides the iPhone™ may be used as an IGD. For example, the iPod Touch™ and the Nexus One™ also include all of the elements of an IGD. Any devices which have a processing unit, a display device, a gravity direction measurement device, an electronic compass, and a three-axis accelerometer may be used. Examples of 3DM devices are the FaroArm™, the Romer Absolute Arm, and the Leica Absolute Tracker™.

It should be understood that the rigid transformations described above may be performed via a single matrix which simultaneously transform the axes and the origin or via at least two matrices which successively transform the axes and the origin. For example, the rigid transformation T_{IGD-To-IGDEarth} may be performed by applying a single matrix which simultaneously transforms the axes X_{IGD}, Y_{IGD}, Z_{IGD} to the axes X_{IGD-Earth}, Y_{IGD-Earth}, Z_{IGD-Earth} and the reference point RP to the origin O_{Earth}, i.e. simultaneously aligns the axes X_{IGD}, Y_{IGD}, Z_{IGD} with the axes X_{IGD-Earth}, Y_{IGD-Earth}, Z_{IGD-Earth}, respectively, and translate the reference point RP to the origin O_{Earth}. Alternatively, the rigid transformation T_{IGD-To-IGDEarth} may be performed by applying a two matrices, i.e. one matrix which transforms the axes X_{IGD}, Y_{IGD}, Z_{IGD} to the axes X_{IGD-Earth}, Y_{IGD-Earth}, Z_{IGD-Earth} and another matrix which transforms the reference point RP to the origin O_{Earth}.

While illustrated in the block diagrams as groups of discrete components communicating with each other via distinct data signal connections, it will be understood by those skilled in the art that the preferred embodiments are provided by a combination of hardware and software components, with some components being implemented by a given function or operation of a hardware or software system, and many of the data paths illustrated being implemented by data communication within a computer application or operating system. The structure illustrated is thus provided for efficiency of teaching the present preferred embodiment.

It should be noted that the present invention can be carried out as a method, can be embodied in a system, a computer readable medium or an electrical or electromagnetic signal. The embodiments of the invention described above are intended to be exemplary only. The scope of the invention is therefore intended to be limited solely by the scope of the appended claims.

## Claims

1. A method comprising:
synchronizing a three-dimensional measurement device (3DM) (600) configured to measure coordinates of points on physical parts in a three-dimensional space and having a 3DM internal 3D coordinate system O_{3DM}, X_{3DM}, Y_{3DM}, and Z_{3DM}, with a hand-held intelligent guidance device (IGD) (604) that is physically separate from the 3DM, the IGD having a processing unit (607), a display device (606), a gravity direction measurement device (608), an electronic compass, a three-axis accelerometer (613) and an IGD internal 3D coordinate system O_{IGD}, X_{IGD}, Y_{IGD}, Z_{IGD}, the synchronizing comprising:
determining coordinates RPX_{IGD}, RPY_{IGD}, RPZ_{IGD} of a reference point RP in the IGD internal 3D coordinate system O_{IGD}, X_{IGD}, Y_{IGD}, Z_{IGD};
defining a coordinate system O_{Earth}, X_{IGD-Earth}, Y_{IGD-Earth}, Z_{IGD-Earth} using a direction opposite to gravity as Z_{IGD-Earth} and a direction corresponding to a magnetic north pole as Y_{IGD-Earth}, from a perspective of the IGD (604);
computing and applying a rigid transformation T_{IGD-To-IGDEarth} to transform axes X_{IGD}, Y_{IGD}, Z_{IGD} of the IGD internal 3D coordinate system to X_{IGD-Earth}, Y_{IGD-Earth}, Z_{IGD-Earth} and the reference point RP having the coordinates RPX_{IGD}, RPY_{IGD}, RPZ_{IGD} to O_{Earth};
determining coordinates RPX_{3DM}, RPY_{3DM}, RPZ_{3DM} of the reference point RP in the 3DM internal 3D coordinate system O_{3DM}, X_{3DM}, Y_{3DM}, and Z_{3DM};
defining a coordinate system O_{Earth}, X_{3DM-Earth}, Y_{3DM-Earth}, Z_{3DM-Earth} using a direction opposite to gravity as Z_{3DM-Earth} and the direction corresponding to the magnetic north pole as Y_{3DM-Earth}, from a perspective of the 3DM (600); and
computing and applying a rigid transformation T_{3DM-To-3DMEarth} to transform axes X_{3DM}, Y_{3DM}, and Z_{3DM} of the 3DM internal 3D coordinate system to axes X_{3DM-Earth}, Y_{3DM-Earth}, Z_{3DM-Earth} and the reference point RP having the coordinates RPX_{3DM}, RPY_{3DM}, RPZ_{3DM} to O_{Earth}; and
displaying, using the display device of the IGD, 3D graphics in a 3D coordinate system synchronized with a 3D coordinate system of the 3DM.

2. The method of claim 1, wherein said determining the coordinates RPX_{3DM}, RPY_{3DM}, RPZ_{3DM} comprises measuring the coordinates RPX_{3DM}, RPY_{3DM}, RPZ_{3DM} using the 3DM.

3. The method of claim 1, wherein said determining coordinates RPX_{IGD}, RPY_{IGD}, RPZ_{IGD} comprises:
displaying a reference mark on the display device (606) of the IGD (604); and
determining the coordinates RPX_{IGD}, RPY_{IGD}, RPZ_{IGD} of the reference mark in the IGD internal 3D coordinate system.

4. The method of claim 3, wherein said determining the coordinates RPX_{3DM}, RPY_{3DM}, RPZ_{3DM} comprising measuring the coordinates RPX_{3DM}, RPY_{3DM}, RPZ_{3DM} of the reference mark displayed on the display of the IGD using the 3DM.

5. The method of claim 1, 2, 3 or 4, further comprising:
determining a variation of position for the IGD (604) in the IGD internal 3D coordinate system O_{IGD}, X_{IGD}, Y_{IGD}, Z_{IGD};
applying the variation of position to the reference point, thereby obtaining an updated reference point; and
computing and applying an updated rigid transformation T_{IGD-To-IGDEarth} to transform the axes X_{IGD}, Y_{IGD}, Z_{IGD} to the axes X_{IGD-Earth}, Y_{IGD-Earth}, Z_{IGD-Earth} and the updated reference point to O_{Earth};
preferably wherein said determining a variation of position comprises measuring an acceleration of the IGD (604) along the axes X_{IGD}, Y_{IGD}, Z_{IGD} using a three-axis accelerometer (613) comprised in the IGD (604) and calculating the variation of position for the IGD (604) in the IGD internal 3D coordinate system from the measured acceleration.

6. The method of any preceding claim, wherein defining a coordinate system O_{Earth}, X_{IGD-Earth}, Y_{IGD-Earth}, Z_{IGD-Earth} comprises:
measuring a direction of gravity using the gravity direction measurement device (608) and defining a vector Z_{IGD-Earth} as opposite to the direction of gravity;
measuring a direction of North magnetic pole using the electronic compass (612) and defining a vector Y_{IGD-Earth} pointing in the North magnetic pole direction; and
computing a vector product of Y_{IGD-Earth} and Z_{IGD-Earth} defining vector X_{IGD-Earth}, and wherein defining a coordinate system O_{Earth}, X_{3DM-Earth}, Y_{3DM-Earth}, Z_{3DM-Earth} comprises:
measuring a direction of gravity using a second gravity direction measurement device integrated in the 3DM (600) and defining a vector Z_{3DM-Earth} as opposite to the direction of gravity;
measuring a direction of North magnetic pole using a second electronic compass integrated in the 3DM (600) and defining a vector Y_{3DM-Earth} pointing in the North magnetic pole direction; and
computing a vector product of Y_{3DM-Earth} and Z_{3DM-Earth} defining vector X_{3DM-Earth}.

7. The method of any preceding claim, further comprising defining a plane formed by Z_{IGD-Earth} and Y_{IGD-Earth}, and rotating one of Y_{IGD-Earth} and Z_{IGD-Earth} to make Z_{IGD-Earth} and Y_{IGD-Earth} perpendicular to each other and defining a plane formed by Z_{3DM-Earth} and Y_{3DM-Earth}, and rotating one of Y_{3DM-Earth} and Z_{3DM-Earth} to make Z_{3DM-Earth} and Y_{3DM-Earth} perpendicular to each other.

8. A system for synchronizing a three-dimensional measurement device (3DM) (600) configured to measure coordinates of points on physical parts in a three-dimensional space and having a 3DM internal 3D coordinate system O_{3DM}, X_{3DM}, Y_{3DM}, and Z_{3DM}, with a handheld intelligent guidance device (IGD) (604) that is physically separate from the 3DM, the IGD having a processing unit (607), a display device (606), a gravity direction measurement device (608), an electronic compass (612), a three-axis accelerometer (613) and an IGD internal 3D coordinate system O_{IGD}, X_{IGD}, Y_{IGD}, Z_{IGD}, the system comprising:
an IGD transformation module (610) operatively connected to the IGD (604) and adapted to define a coordinate system O_{Earth}, X_{IGD-Earth}, Y_{IGD-Earth}, Z_{IGD-Earth} using a direction opposite to gravity as Z_{IGD-Earth} and a direction corresponding to a magnetic north pole as Y_{IGD-Earth}, from a perspective of the IGD (604), and compute and apply a rigid transformation T_{IGD-To-IGDEarth} to transform axes X_{IGD}, Y_{IGD}, Z_{IGD} of the IGD internal 3D coordinate system to axes X_{IGD-Earth}, Y_{IGD-Earth}, Z_{IGD-Earth} and a reference point RP having coordinates RPX_{IGD}, RPY_{IGD}, RPZ_{IGD} in the IGD internal 3D coordinate system to O_{Earth}; and
a 3DM transformation module (602) operatively connected to the 3DM (600) and adapted to define a coordinate system O_{Earth}, X_{3DM-Earth}, Y_{3DM-Earth}, Z_{3DM-Earth} using a direction opposite to gravity as Z_{3DM-Earth} and the direction corresponding to the magnetic north pole as Y_{3DM-Earth}, from a perspective of the 3DM (600), compute and apply a rigid transformation T_{3DM-To-3DMEarth} to transform axes X_{3DM}, Y_{3DM}, and Z_{3DM} of the 3DM internal 3D coordinate system to axes X_{3DM-Earth}, Y_{3DM-Earth}, Z_{3DM-Earth} and the reference point RP having coordinates RPX_{3DM}, RPY_{3DM}, RPZ_{3DM} in the 3DM internal 3D coordinate system to O_{Earth}.

9. The system of claim 8, wherein the reference point RP is a reference mark to be displayed on the display device (606) of the IGD (604), the IGD (604) is adapted to determine the coordinates RPX_{IGD}, RPY_{IGD}, RPZ_{IGD} of the reference mark, and the 3DM (600) is adapted to measure the coordinates of the reference RPX_{3DM}, RPY_{3DM}, RPZ_{3DM} mark displayed on the display device (606) of the IGD (604).

10. The system of claim 8, further comprising an IGD coordinate module (614) adapted to determine a variation of position for the IGD (604) in the IGD internal 3D coordinate system O_{IGD}, X_{IGD}, Y_{IGD}, Z_{IGD}, applying the variation of position to the reference point RP to obtain an updated reference point, and compute and apply an updated rigid transformation T_{IGD-To-IGDEarth} to transform the axes X_{IGD}, Y_{IGD}, Z_{IGD} to the axes X_{IGD-Earth}, Y_{IGD-Earth}, Z_{IGD-Earth} and the updated reference point to O_{Earth}.

11. The system of claim 10, wherein the IGD (604) further comprises a three-axis accelerometer (613) for measuring an acceleration of the IGD (604) in the IGD internal 3D coordinate system and the IGD coordinate module (614) is further adapted to calculate the variation of position for the IGD (604) in the IGD internal 3D coordinate system from the measured acceleration.

12. The system of claim 8, 9, 10 or 11, wherein at least one the 3DM transformation module (602) and the IGD transformation module (610) is integrated inside the 3DM (600) and the IGD (604), respectively.

13. At least one computer program product for synchronizing a three-dimensional measurement device (3DM) (600) having a 3DM internal 3D coordinate system O_{3DM}, X_{3DM}, Y_{3DM}, and Z_{3DM}, with an intelligent guidance device (IGD) (604) having a display device (606), a gravity direction measurement device (608), an electronic compass (612), and an IGD internal 3D coordinate system O_{IGD}, X_{IGD}, Y_{IGD}, Z_{IGD}, comprising instruction means encoded on a computer-readable medium, for causing operations as set out in any of claims 1 to 7.

## Patentansprüche

1. Verfahren, umfassend:
Synchronisieren einer dreidimensionalen Messvorrichtung (3DM) (600), die ausgelegt ist, Koordinaten von Punkten auf physischen Teilen in einem dreidimensionalen Raum zu messen, und ein 3DM-internes 3D-Koordinatensystem O_{3DM}, X_{3DM}, Y_{3DM} und Z_{3DM}, aufweist, mit einer intelligenten Hand-Führungsvorrichtung (IGD) (604), die physisch getrennt von der 3DM ist, wobei die IGD eine Verarbeitungseinheit (607), eine Anzeigevorrichtung (606), eine Schwerkraftrichtungs-Messvorrichtung (608), einen elektronischen Kompass, ein Drei-Achsen-Akzelerometer (613) und ein IGD-internes 3D-Koordinatensystem O_{IGD}, X_{IGD}, Y_{IGD}, Z_{IGD} aufweist, wobei das Synchronisieren umfasst:
Bestimmen von Koordinaten RPX_{IGD}, RPY_{IGD}, RPZ_{IGD} eines Referenzpunkts RP in dem IGD-internen 3D-Koordinatensystem O_{IGD}, X_{IGD}, Y_{IGD}, Z_{IGD};
Definieren eines Koordinatensystems O_{Earth}, X_{IGD-Earth}, Y_{IGD-Earth}, Z_{IGD-Earth} unter Verwendung einer Richtung entgegengesetzt zur Schwerkraft als Z_{IGD-Earth} und einer Richtung entsprechend einem magnetischen Nordpol als Y_{IGD-Earth}, aus einer Perspektive der IGD (604);
Berechnen und Anwenden einer starren Transformation T_{IGD-To-IGDEarth}, um Achsen X_{IGD}, Y_{IGD}, Z_{IGD} des IGD-internen 3D-Koordinatensystems in X_{IGD-Earth}, Y_{IGD-Earth}, Z_{IGDEarth} und den Referenzpunkt RP mit den Koordinaten RPX_{IGD}, RPY_{IGD}, RPZ_{IGD} in O_{Earth} zu transformieren;
Bestimmen der Koordinaten RPX_{3DM}, RPY_{3DM}, RPZ_{3DM} des Referenzpunkts RP in dem 3DM-internen 3D-Koordinatensystem O_{3DM}, X_{3DM}, Y_{3DM} und Z_{3DM};
Definieren eines Koordinatensystems O_{Earth}, X_{3DM-Earth}, Y_{3DM-Earth}, Z_{3DM-Earth} unter Verwendung einer Richtung entgegengesetzt zur Schwerkraft als Z_{3DM-Earth} und der Richtung entsprechend dem magnetischen Nordpol als Y_{3DM-Earth}, aus einer Perspektive der 3DM (600); und
Berechnen und Anwenden einer starren Transformation T_{3DM-To-3DMEarth}, um Achsen X_{3DM}, Y_{3DM} und Z_{3DM} des 3DM-internen 3D-Koordinatensystems in Achsen X_{3DM-Earth}, Y_{3DM-Earth}, Z_{3DM-Earth} und den Referenzpunkt RP mit den Koordinaten RPX_{3DM}, RPY_{3DM}, RPZ_{3DM} in O_{Earth} zu transformieren; und
Anzeigen, unter Verwendung der Anzeigevorrichtung der IGD, von 3D-Grafik in einem 3D-Koordinatensystem, synchronisiert mit einem 3D-Koordinatensystem der 3DM.

2. Verfahren nach Anspruch 1, wobei das Bestimmen der Koordinaten RPX_{3DM}, RPY_{3DM}, RPZ_{3DM} ein Messen der Koordinaten RPX_{3DM}, RPY_{3DM}, RPZ_{3DM} unter Verwendung der 3DM umfasst.

3. Verfahren nach Anspruch 1, wobei das Bestimmen der Koordinaten RPX_{IGD}, RPY_{IGD}, RPZ_{IGD} umfasst:
Anzeigen einer Referenzmarke auf der Anzeigevorrichtung (606) der IGD (604); und
Bestimmen der Koordinaten RPX_{IGD}, RPY_{IGD}, RPZ_{IGD} der Referenzmarke in dem IGD-internen 3D-Koordinatensystem.

4. Verfahren nach Anspruch 3, wobei das Bestimmen der Koordinaten RPX_{3DM}, RPY_{3DM}, RPZ_{3DM} ein Messen der Koordinaten RPX_{3DM}, RPY_{3DM}, RPZ_{3DM} der Referenzmarke, die auf der Anzeige der IGD angezeigt wird, unter Verwendung der 3DM umfasst.

5. Verfahren nach Anspruch 1, 2, 3 oder 4, ferner umfassend:
Bestimmen einer Positionsvariation für die IGD (604) in dem IGD-internen 3D-Koordinatensystem O_{IGD}, X_{IGD}, Y_{IGD}, Z_{IGD};
Anwenden der Positionsvariation auf den Referenzpunkt, wodurch ein aktualisierter Referenzpunkt erhalten wird; und
Berechnen und Anwenden einer aktualisierten starren Transformation T_{IGDToIGDEarth}, um die Achsen X_{IGD}, Y_{IGD}, Z_{IGD} in die Achsen X_{IGD-Earth}, Y_{IGD-Earth}, Z_{IGD-Earth} und den aktualisierten Referenzpunkt in O_{Earth} zu transformieren;
wobei vorzugsweise das Bestimmen einer Positionsvariation ein Messen einer Beschleunigung der IGD (604) entlang der Achsen X_{IGD}, Y_{IGD}, Z_{IGD} unter Verwendung eines Drei-Achsen-Akzelerometers (613), das in der IGD (604) enthalten ist, und ein Berechnen der Positionsvariation für die IGD (604) in dem IGD-internen 3D-Koordinatensystem aus der gemessenen Beschleunigung umfasst.

6. Verfahren nach einem der vorhergehenden Ansprüche, wobei das Definieren eines Koordinatensystems O_{Earth}, X_{IGD-Earth}, Y_{IGD-Earth}, Z_{IGD-Earth} umfasst:
Messen einer Schwerkraftrichtung unter Verwendung der Schwerkraftrichtungs-Messvorrichtung (608) und Definieren eines Vektors Z_{IGD-Earth} als entgegengesetzt zur Schwerkraftrichtung;
Messen einer Richtung des magnetischen Nordpols unter Verwendung des elektronischen Kompasses (612) und Definieren eines Vektors Y_{IGD-Earth}, der in die Richtung des magnetischen Nordpols zeigt; und
Berechnen eines Vektorprodukts von Y_{IGD-Earth} und Z_{IGD-Earth}, das den Vektor X_{IGD-Earth} definiert,
und wobei das Definieren eines Koordinatensystems O_{Earth}, X_{3DM-Earth}, Y_{3DM-Earth}, Z_{3DM-Earth} umfasst:
Messen einer Schwerkraftrichtung unter Verwendung einer zweiten Schwerkraftrichtungs-Messvorrichtung, die in der 3DM (600) integriert ist, und Definieren eines Vektors Z_{3DM-Earth} als entgegengesetzt zur Schwerkraftrichtung;
Messen einer Richtung des magnetischen Nordpols unter Verwendung eines zweiten elektronischen Kompasses, der in der 3DM (600) integriert ist, und Definieren eines Vektors Y_{3DM-Earth}, der in die Richtung des magnetischen Nordpols zeigt; und
Berechnen eines Vektorprodukts von Y_{3DM-Earth} und Z_{3DM-Earth}, das den Vektor X_{3DMEarth} definiert.

7. Verfahren nach einem der vorhergehenden Ansprüche, ferner umfassend ein Definieren einer Ebene, die durch Z_{IGD-Earth} und Y_{IGD-Earth} gebildet wird, und Drehen eines von Y_{IGD-Earth} und Z_{IGD-Earth}, um Z_{IGD-Earth} und Y_{IGD-Earth} rechtwinklig zueinander zu machen, und Definieren einer Ebene, die durch Z_{3DM-Earth} und Y_{3DM-Earth} gebildet wird, und Drehen eines von Y_{3DM-Earth} und Z_{3DM-Earth}, um Z_{3DM-Earth} und Y_{3DM-Earth} rechtwinklig zueinander zu machen.

8. System zum Synchronisieren einer dreidimensionalen Messvorrichtung (3DM) (600), die ausgelegt ist, Koordinaten von Punkten auf physischen Teilen in einem dreidimensionalen Raum zu messen, und ein 3DM-internes 3D-Koordinatensystem O_{3DM}, X_{3DM}, Y_{3DM} und Z_{3DM} aufweist, mit einer intelligenten Hand-Führungsvorrichtung (IGD) (604), die physisch getrennt von der 3DM ist, wobei die IGD eine Verarbeitungseinheit (607), eine Anzeigevorrichtung (606), eine Schwerkraftrichtungs-Messvorrichtung (608), einen elektronischen Kompass (612), ein Drei-Achsen-Akzelerometer (613) und ein IGD-internes 3D-Koordinatensystem O_{IGD}, X_{IGD}, Y_{IGD}, Z_{IGD} aufweist, wobei das System umfasst:
ein IGD-Transformationsmodul (610), das betreibbar mit der IGD (604) verbunden und geeignet ist, ein Koordinatensystem O_{Earth}, X_{IGD-Earth}, Y_{IGD-Earth}, Z_{IGD-Earth} unter Verwendung einer Richtung entgegengesetzt zur Schwerkraft als Z_{IGD-Earth} und einer Richtung entsprechend einem magnetischen Nordpol als Y_{IGD-Earth}, aus einer Perspektive der IGD (604), zu definieren, und eine starre Transformation T_{IGDToIGDEarth} zu berechnen und anzuwenden, um Achsen X_{IGD}, Y_{IGD}, Z_{IGD} des IGD-internen 3D-Koordinatensystems in Achsen X_{IGD-Earth}, Y_{IGD-Earth}, Z_{IGD-Earth} und einen Referenzpunkt RP mit den Koordinaten RPX_{IGD}, RPY_{IGD}, RPZ_{IGD} in dem IGD-internen 3D-Koordinantensystem in O_{Earth} zu transformieren; und
ein 3DM-Transformationsmodul (602), das betreibbar mit der 3DM (600) verbunden und geeignet ist, ein Koordinatensystem O_{Earth}, X_{3DM-Earth}, Y_{3DM-Earth}, Z_{3DMEarth} unter Verwendung einer Richtung entgegengesetzt zur Schwerkraft als Z_{3DM-Earth} und der Richtung entsprechend dem magnetischen Nordpol als Y_{3DM-Earth}, aus einer Perspektive der 3DM (600), zu definieren, und eine starre Transformation T_{3DM-To-3DMEarth} zu berechnen und anzuwenden, um Achsen X_{3DM}, Y_{3DM} und Z_{3DM} des 3DM-internen 3D-Koordinatensystems in Achsen X_{3DM-Earth}, Y_{3DMEarth}, Z_{3DM-Earth} und den Referenzpunkt RP mit den Koordinaten RPX_{3DM}, RPY_{3DM}, RPZ_{3DM} in dem 3DM-internen 3D-Koordinantensystem in O_{Earth} zu transformieren.

9. System nach Anspruch 8, wobei der Referenzpunkt RP eine Referenzmarke ist, die auf der Anzeigevorrichtung (606) der IGD (604) anzuzeigen ist, wobei die IGD (604) geeignet ist, die Koordinaten der RPX_{IGD}, RPY_{IGD}, RPZ_{IGD} der Referenzmarke zu bestimmen, und die 3DM (600) geeignet ist, die Koordinaten der Referenzmarke RPX_{3DM}, RPY_{3DM}, RPZ_{3DM} zu messen, die auf der Anzeigevorrichtung (606) der IGD (604) angezeigt wird.

10. System nach Anspruch 8, ferner umfassend ein IGD-Koordinatenmodul (614), das geeignet ist, eine Positionsvariation für die IGD (604) in dem IGD-internen 3D-Koordinatensystem O_{IGD}, X_{IGD}, Y_{IGD}, Z_{IGD} zu bestimmten, wobei die Positionsvariation auf den Referenzpunkt RP angewendet wird, um einen aktualisierten Referenzpunkt zu erhalten, und eine aktualisierte starre Transformation T_{IGDToIGDEarth} zu berechnen und anzuwenden, um die Achsen X_{IGD}, Y_{IGD}, Z_{IGD} in die Achsen X_{IGD-Earth}, Y_{IGD-Earth}, Z_{IGD-Earth} und den aktualisierten Referenzpunkt in O_{Earth} zu transformieren.

11. System nach Anspruch 10, wobei die IGD (604) ferner ein Drei-Achsen-Akzelerometer (613) zum Messen einer Beschleunigung der IGD (604) in dem IGD-internen 3D-Koordinatensystem umfasst, und das IGD-Koordinatenmodul (614) ferner geeignet ist, die Positionsvariation für die IGD (604) in dem IGD-internen 3D-Koordinatensystem aus der gemessenen Beschleunigung zu berechnen.

12. System nach Anspruch 8, 9, 10 oder 11, wobei mindestens eines von dem 3DM-Transformationsmodul (602) und dem IGD-Transformationsmodul (610) innerhalb der 3DM (600) bzw. der IGD (604) integriert ist.

13. Mindestens ein Computerprogrammprodukt zum Synchronisieren einer dreidimensionalen Messvorrichtung (3DM) (600), die ein 3DM-internes 3D-Koordinatensystem O_{3DM}, X_{3DM}, Y_{3DM} und Z_{3DM}, aufweist, mit einer intelligenten Hand-Führungsvorrichtung (IGD) (604), die eine Anzeigevorrichtung (606), eine Schwerkraftrichtungs-Messvorrichtung (608), einen elektronischen Kompass (612) und ein IGD-internes 3D-Koordinatensystem O_{IGD}, X_{IGD}, Y_{IGD}, Z_{IGD} aufweist, umfassend Instruktionsmittel, die auf einem computerlesbaren Medium codiert sind, um Operationen zu bewirken, wie in einem der Ansprüche 1 bis 7 ausgeführt.

## Revendications

1. Procédé comprenant :
la synchronisation d'un dispositif de mesure en trois dimensions (3DM) (600) configuré pour mesurer des coordonnées de points sur des parties physiques dans un espace tridimensionnel et ayant un système de coordonnées 3D interne du 3DM O_{3DM}, X_{3DM}, Y_{3DM} et Z_{3DM} avec un dispositif de guidage intelligent portatif (IGD) (604) qui est physiquement séparé du 3DM, l'IGD ayant une unité de traitement (607), un dispositif d'affichage (606), un dispositif de mesure de direction de la gravité (608), un compas électronique, un accéléromètre à trois axes (613) et un système de coordonnées 3D interne de l'IGD O_{IGD}, X_{IGD}, Y_{IGD} et Z_{IGD}, la synchronisation comprenant :
la détermination de coordonnées RPX_{IGD}, RPY_{IGD}, RPZ_{IGD} d'un point de référence RP dans le système de coordonnées 3D interne de l'IGD O_{IGD}, X_{IGD}, Y_{IGD}, Z_{IGD};
la définition d'un système de coordonnées O_{Earth}, X_{IGD-Earth}, Y_{IGD-Earth}, Z_{IGD-Earth} en utilisant une direction opposée à la gravité comme Z_{IGD-Earth} et une direction correspondant à un pôle nord magnétique comme Y_{IGD-Earth}, d'un point de vue de l'IGD (604) ;
le calcul et l'application d'une transformation rigide T_{IGD-To-IGDEarth} pour transformer des axes X_{IGD}, Y_{IGD}, Z_{IGD} du système de coordonnées 3D interne de l'IGD en X_{IGD-Earth}, Y_{IGD-Earth}, Z_{IGD-Earth} et le point de référence RP ayant les coordonnées RPX_{IGD}, RPY_{IGD}, RPZ_{IGD} en O_{Earth} ;
la détermination de coordonnées RPX_{3DM}, RPY_{3DM}, RPZ_{3DM} du point de référence RP dans le système de coordonnées 3D interne du 3DM O_{3DM}, X_{3DM}, Y_{3DM} et Z_{3DM} ;
la définition d'un système de coordonnées O_{Earth}, X_{3DM-Earth}, Y_{3DM-Earth}, Z_{3DM-Earth} en utilisant une direction opposée à la gravité comme Z_{3DM-Earth} et la direction correspondant au pôle nord magnétique comme Y_{3DM-Earth}, d'un point de vue du 3DM (600) ; et
le calcul et l'application d'une transformation rigide T_{3DM-To-3DMEarth} pour transformer des axes X_{3DM}, Y_{3DM} et Z_{3DM} du système de coordonnées 3D interne du 3DM en axes X_{3DM-Earth}, Y_{3DM-Earth}, Z_{3DM-Earth} et le point de référence RP ayant les coordonnées RPX_{3DM}, RPY_{3DM}, RPZ_{3DM} en O_{Earth} ; et
l'affichage, en utilisant le dispositif d'affichage de l'IGD, de graphiques 3D dans un système de coordonnées 3D synchronisé avec un système de coordonnées 3D du 3DM.

2. Procédé selon la revendication 1, dans lequel ladite détermination des coordonnées RPX_{3DM}, RPY_{3DM}, RPZ_{3DM} comprend la mesure des coordonnées RPX_{3DM}, RPY_{3DM}, RPZ_{3DM} en utilisant le 3DM.

3. Procédé selon la revendication 1, dans lequel ladite détermination de coordonnées RPX_{IGD}, RPY_{IGD}, RPZ_{IGD} comprend :
l'affichage d'une marque de référence sur le dispositif d'affichage (606) de l'IGD (604) ; et
la détermination des coordonnées RPX_{IGD}, RPY_{IGD}, RPZ_{IGD} de la marque de référence dans le système de coordonnées 3D interne de l'IGD.

4. Procédé selon la revendication 3, dans lequel ladite détermination des coordonnées RPX_{3DM}, RPY_{3DM}, RPZ_{3DM} comprend la mesure des coordonnées RPX_{3DM}, RPY_{3DM}, RPZ_{3DM} de la marque de référence affichée sur le dispositif d'affichage de l'IGD en utilisant le 3DM.

5. Procédé selon la revendication 1, 2, 3 ou 4, comprenant en outre :
la détermination d'une variation de position pour l'IGD (604) dans le système de coordonnées 3D interne de l'IGD O_{IGD}, X_{IGD}, Y_{IGD}, Z_{IGD} ;
l'application de la variation de position au point de référence, en obtenant ainsi un point de référence mis à jour ; et
le calcul et l'application d'une transformation rigide mise à jour T_{IGD-To-IGDEarth} pour transformer les axes X_{IGD}, Y_{IGD} et Z_{IGD} dans les axes X_{IGD-Earth}, Y_{IGD-Earth}, Z_{IGD-Earth} et le point de référence mis à jour en O_{Earth} ;
de préférence dans lequel ladite détermination d'une variation de position comprend la mesure d'une accélération de l'IGD (604) suivant les axes, X_{IGD}, Y_{IGD}, Z_{IGD} en utilisant un accéléromètre à trois axes (613) compris dans l'IGD (604) et le calcul de la variation de position pour l'IGD (604) dans le système de coordonnées 3D interne de l'IGD à partir de l'accélération mesurée.

6. Procédé selon l'une quelconque des revendications précédentes, dans lequel la définition d'un système de coordonnées O_{Earth}, X_{IGD-Earth}, Y_{IGD-Earth}, Z_{IGD-Earth} comprend :
la mesure d'une direction de la gravité en utilisant le dispositif de mesure de direction de la gravité (608) et la définition d'un vecteur Z_{IGD-Earth} comme opposé à la direction de la gravité ;
la mesure d'une direction du pôle nord magnétique en utilisant le compas électronique (612) et la définition d'un vecteur Y_{IGD-Earth} pointant dans la direction du pôle nord magnétique ; et
le calcul d'un produit vectoriel de Y_{IGD-Earth} et Z_{IGD-Earth} en définissant le vecteur X_{IGD-Earth}, et dans lequel la définition d'un système de coordonnées O_{Earth}, X_{3DM-Earth}, Y_{3DM-Earth}, Z_{3DM-Earth} comprend :
la mesure d'une direction de la gravité en utilisant un deuxième dispositif de mesure de direction de la gravité intégré dans le 3DM (600) et la définition d'un vecteur Z_{3DM-Earth} comme opposé à la direction de la gravité ;
la mesure d'une direction du pôle nord magnétique en utilisant un deuxième compas électronique intégré dans le 3DM (600) et la définition d'un vecteur Y_{3DM-Earth} pointant dans la direction du pôle nord magnétique ; et
le calcul d'un produit vectoriel de Y_{3DM-Earth} et Z_{3DM-Earth} en définissant le vecteur X_{3DM-Earth}.

7. Procédé selon l'une quelconque des revendications précédentes, comprenant en outre la définition d'un plan formé par Z_{IGD-Earth} et Y_{IGD-Earth} et la rotation d'un de Y_{IGD-Earth} et Z_{IGD-Earth} pour rendre Z_{IGD-Earth} et Y_{IGD-Earth} perpendiculaires l'un à l'autre et la définition d'un plan formé par Z_{3DM-Earth} et Y_{3DM-Earth} et la rotation d'un de Y_{3DM-Earth} et Z_{3DM-Earth} pour rendre Z_{3DM-Earth} et Y_{3DM-Earth} perpendiculaires l'un à l'autre.

8. Système de synchronisation d'un dispositif de mesure en trois dimensions (3DM) (600) configuré pour mesurer des coordonnées de points sur des parties physiques dans un espace tridimensionnel et ayant un système de coordonnées 3D interne du 3DM O_{3DM}, X_{3DM}, Y_{3DM} et Z_{3DM} avec un dispositif de guidage intelligent portatif (IGD) (604) qui est physiquement séparé du 3DM, l'IGD ayant une unité de traitement (607), un dispositif d'affichage (606), un dispositif de mesure de direction de la gravité (608), un compas électronique (612), un accéléromètre à trois axes (613) et un système de coordonnées 3D interne de l'IGD O_{IGD}, X_{IGD}, Y_{IGD} et Z_{IGD}, le système comprenant :
un module de transformation IGD (610) connecté fonctionnellement à l'IGD (604) et adapté pour définir un système de coordonnées O_{Earth}, X_{IGD-Earth}, Y_{IGD-Earth}, Z_{IGD-Earth} en utilisant une direction opposée à la gravité comme Z_{IGD-Earth} et une direction correspondant à un pôle nord magnétique comme Y_{IGD-Earth}, d'un point de vue de l'IGD (604) et calculer et appliquer une transformation rigide T_{IGD-To-IGDEarth} pour transformer des axes X_{IGD}, Y_{IGD}, Z_{IGD} du système de coordonnées 3D interne de l'IGD en axes X_{IGD-Earth}, Y_{IGD-Earth}, Z_{IGD-Earth} et le point de référence RP ayant les coordonnées RPX_{IGD}, RPY_{IGD}, RPZ_{IGD} dans le système de coordonnées 3D interne de l'IGD en O_{Earth} ; et
un module de transformation 3DM (602) connecté fonctionnellement au 3DM (600) et adapté pour définir un système de coordonnées O_{Earth}, X_{3DM-Earth}, Y_{3DM-Earth}, Z_{3DM-Earth} en utilisant une direction opposée à la gravité comme Z_{3DM-Earth} et la direction correspondant au pôle nord magnétique comme Y_{3DM-Earth}, d'un point de vue du 3DM (600), calculer et appliquer une transformation rigide T_{3DM-To-3DMEarth} pour transformer des axes X_{3DM}, Y_{3DM} et Z_{3DM} du système de coordonnées 3D interne du 3DM en axes X_{3DM-Earth}, Y_{3DM-Earth}, Z_{3DM-Earth} et le point de référence RP ayant les coordonnées RPX_{3DM}, RPY_{3DM}, RPZ_{3DM} dans le système de coordonnées 3D interne du 3DM en O_{Earth}.

9. Système selon la revendication 8, dans lequel le point de référence RP est une marque de référence à afficher sur le dispositif d'affichage (606) de l'IGD (604), l'IGD (604) est adapté pour déterminer les coordonnées RPX_{IGD}, RPY_{IGD}, RPZ_{IGD} de la marque de référence, et le 3DM (600) est adapté pour mesurer les coordonnées de la marque de référence RPX_{3DM}, RPY_{3DM}, RPZ_{3DM} affichée sur le dispositif d'affichage (606) de l'IGD (604).

10. Système selon la revendication 8, comprenant en outre un module de coordonnées d'IGD (614) adapté pour déterminer une variation de position pour l'IGD (604) dans le système de coordonnées 3D interne de l'IGD O_{IGD}, X_{IGD}, Y_{IGD}, Z_{IGD}, en appliquant la variation de position au point de référence RP pour obtenir un point de référence mis à jour, et calculer et appliquer une transformation rigide mise à jour T_{IGD-To-IGDEarth} pour transformer les axes X_{IGD}, Y_{IGD} et Z_{IGD} dans les axes X_{IGD-Earth}, Y_{IGD-Earth}, Z_{IGD-Earth} et le point de référence mis à jour en O_{Earth}.

11. Système selon la revendication 10, dans lequel l'IGD (604) comprend en outre un accéléromètre à trois axes (613) pour mesurer une accélération de l'IGD (604) dans le système de coordonnées 3D interne de l'IGD et le module de coordonnées d'IGD (614) est adapté en outre pour calculer la variation de position pour l'IGD (604) dans le système de coordonnées 3D interne de l'IGD à partir de l'accélération mesurée.

12. Système selon la revendication 8, 9, 10 ou 11, dans lequel au moins un du module de transformation 3DM (602) et du module de transformation IGD (610) est intégré dans le 3DM (600) et l'IGD (604), respectivement.

13. Au moins un produit de programme informatique pour synchroniser un dispositif de mesure en trois dimensions (3DM) (600) ayant un système de coordonnées 3D interne du 3DM O_{3DM}, X_{3DM}, Y_{3DM} et Z_{3DM} avec un dispositif de guidage intelligent (IGD) (604) ayant un dispositif d'affichage (606), un dispositif de mesure de direction de la gravité (608), un compas électronique (612) et un système de coordonnées 3D interne de l'IGD O_{IGD}, X_{IGD}, Y_{IGD}, Z_{IGD}, comprenant des moyens d'instruction codés sur un support lisible par ordinateur, pour entraîner des opérations telles qu'exposées dans l'une quelconque des revendications 1 à 7.
